# EUROPÄISCHE PATENTSCHRIFT

(11) **EP 3 647 095 B1**
(45) Veröffentlichungstag und Bekanntmachung des Hinweises auf die Patenterteilung: **10.03.2021**
(21) Anmeldenummer: 19206756.9
(22) Anmeldetag: 01.11.2019
(51) Int. Cl.: B60J 10/21, B60J 10/86

(54) **NUTZFAHRZEUGAUFBAU UND DICHTUNGSANORDNUNG ZUR VERWENDUNG IN EINEM NUTZFAHRZEUGAUFBAU**
COMMERCIAL VEHICLE STRUCTURE AND SEALING ASSEMBLY FOR USE IN A COMMERCIAL VEHICLE STRUCTURE
CARROSSERIE DE VÉHICULE UTILITAIRE ET DISPOSITIF DE JOINT D'ÉTANCHÉITÉ DESTINÉ À L'UTILISATION DANS UNE CARROSSERIE DE VÉHICULE UTILITAIRE

(30) Priorität: 02.11.2018 DE 102018127416
(43) Veröffentlichungstag der Anmeldung: 06.05.2020
(73) Patentinhaber: Fahrzeugwerk Bernard Krone GmbH & Co. KG, 49757 Werlte (DE)
(72) Erfinder: Reibe, Mathias, 19243 Wittenburg (DE)
(74) Vertreter: Pott, Ulrich

(56) Entgegenhaltungen:
- EP-A2- 0 500 058
- CN-A- 108 068 590
- US-A- 4 015 368

## Beschreibung

Die Erfindung betrifft einen Nutzfahrzeugaufbau, insbesondere in Form eines Kühlkoffers, mit zumindest einer durch ein Schließ- und Wandungsteil in einer Verschlussposition zu verschließenden Öffnung. In der Verschlussposition ist das Schließ- und Wandungsteil von einem Rand der Öffnung beabstandet. An der Öffnung oder an dem Schließ- und Wandungsteil, gegebenenfalls auch beidseitig, ist eine Dichtungsanordnung angeordnet, die in der Verschlussposition den Abstand zwischen dem Rand der Öffnung und dem Schließ- und Wandungsteil zumindest bereichsweise überbrückt und abdichtet.

Die Dichtungsanordnung umfasst einen Basiskörper sowie zumindest eine an dem Basiskörper angeordnete Dichtlippe. Die Dichtlippe erstreckt sich vom Basiskörper weggerichtet dergestalt, dass in einer Verschlussposition der Abstand zwischen Schließ- und Wandungsteil und dem Rand der Öffnung von der Dichtlippe überbrückt wird. Die Dichtungsanordnung umfasst zumindest zwei, vorzugsweise rechtwinklig zueinander angeordnete Abschnitte, die über einen Eckbereich miteinander verbunden sind, wobei die Dichtlippe über die zumindest zwei Abschnitte sowie den Eckbereich verläuft. Weiterhin umfasst die Erfindung eine entsprechend ausgebildete Dichtungsanordnung zur Verwendung in einem Nutzfahrzeugaufbau, insbesondere einem Kühlkoffer, gemäß dem Oberbegriff des Anspruches 11.

Die Öffnungen eines Nutzfahrzeugaufbaus sind, insbesondere im Fall eines Kühlkoffers, möglichst dicht zu verschließen. Im Falle eines Kühlkoffers beispielsweise kann andernfalls kalte Luft aus dem Inneren des Kühlkoffers austreten bzw. warme Luft von außen nach innen gelangen. Durch eine optimale Abdichtung kann dieser Wärmeaustausch minimiert und der notwendige Energieaufwand für die Kühlung des Kühlkoffers reduziert werden. Gleichzeitig sollten sich die Öffnungen jedoch auch einfach öffnen lassen und die Dichtheit auch bei vielfach wiederholtem Öffnen gewährleistet bleiben.

Im Stand der Technik werden hierzu beispielsweise als Schließ- und Wandungsteile fungierende Hecktüren von Nutzfahrzeugaufbauten mit dem Rand der Tür umfassenden Dichtungsprofilen versehen. Die Dichtungsprofile weisen mehrere, parallel zueinander angeordnete und den Rand der Tür umlaufende Dichtlippen auf, die sich in der Türebene erstrecken. Diese sind vorzugsweise als Gleitlippen ausgebildet. Wird eine derartige Tür eines Nutzfahrzeugaufbaus in die entsprechend zugehörige Öffnung, wie zum Beispiel die Hecköffnung, eingebracht, überdecken die Dichtlippen der Dichtungsanordnung den Abstand zwischen dem Tür und dem Rand der Öffnung. Der Rand der Öffnung ist hierbei ein Bereich, der sich in das Nutzfahrzeug herein erstreckt und in den das Schließ- und Wandungsteil in der Verschlussposition eingebracht ist. Der Rand der Öffnung wirkt mit den Dichtlippen der Dichtungsanordnung zusammen, um eine Abdichtung der Öffnung zu bewirken. Der Abstand ist hierbei der Abstand zwischen dem Türblatt ohne die den Rand der Tür umfassenden Dichtungsprofile und dem Rand der Öffnung. Die Dichtlippen sind hierzu länger ausgeführt als der Abstand zwischen Tür und Rand der Öffnung, um eine sichere Abdichtung zu gewährleisten. Die Dichtlippen weisen in der Verschlussposition eine Überdeckung mit dem Rand der Öffnung auf. Hierbei sind die Dichtlippen in der Verschlussposition zumindest teilweise umgebogen. Durch die Überdeckung liegen die Dichtlippen bogenförmig am Rand der Öffnung an. Hierdurch wird die Dichtwirkung bei einem Druckunterschied zwischen dem Inneren des Nutzfahrzeugaufbaus und der Umgebung verbessert, wenn die Dichtlippen in Richtung des Volumens, in dem ein geringerer Druck herrscht, gewölbt sind. Ein solcher Druckunterschied kann beispielsweise durch das Kühlen des Innenraumvolumens eines Kühlkofferaufbaus hervorgerufen werden.

Derartige Dichtungsvorrichtungen für Nutzfahrzeugaufbauten sind beispielsweise aus der EP 1 726 468 bekannt.

Aufgabe der vorliegenden Erfindung ist es, auf einfache Weise einen Nutzfahrzeugaufbau bereitzustellen, dessen Öffnungen verbessert abgedichtet werden. Weiterhin ist es Aufgabe der vorliegenden Erfindung, eine entsprechende Dichtungsanordnung zur Verwendung in Nutzfahrzeugaufbauten bereitzustellen, mit der eine verbesserte Abdichtung von Nutzfahrzeugaufbauten bewirkt werden kann.

Gelöst wird die Aufgabe erfindungsgemäß durch einen Nutzfahrzeugaufbau, bei dem die Dichtlippe der Dichtungsanordnung im Eckbereich eine geringere vom Basiskörper weggerichtete Erstreckung aufweist als in zumindest einem außerhalb des Eckbereichs angeordneten Bereich der Dichtungsanordnung. Weiterhin wird die Aufgabe gelöst durch eine entsprechende Dichtungsanordnung, bei der die Dichtlippe im Eckbereich eine geringere vom Basiskörper weggerichtet Erstreckung aufweist als zumindest in einem außerhalb des Eckbereichs angeordnetem Bereich der Dichtungsanordnung.

Bei Nutzfahrzeugaufbauten mit Dichtungsanordnungen gemäß dem Stand der Technik kann in Eckbereichen, wenn die Dichtlippe in dem Eckbereich benachbarten Abschnitten in einer Verschlussposition in die gleiche Richtung verbogen wird, um den Abstand zwischen einem Schließ- und Wandungsteil und einem Rand der Öffnung zu überbrücken und zu überdecken, eine Materialanhäufung auftreten. So entsteht ein Faltenwurf, der dazu führt, dass in den Eckbereichen die Dichtlippe nicht vollständig an dem Rand der Öffnung anliegt. Durch eine derartige Überfaltung der Dichtlippe kann sich ein Leckagepfad ausbilden. Die Dichtungsanordnung verliert somit in dem betroffenen Eckbereich einen Teil ihrer Dichtwirkung. Durch die erfindungsgemäße Ausgestaltung der Dichtlippe im Eckbereich, das heißt mit einer geringeren vom Basiskörper weggerichteten Erstreckung oder in anderen Worten mit im Eckbereich kürzerer Dichtlippe, kommt es im Eckbereich zu geringeren Verformungen der Dichtlippe. Hierdurch wird die Gefahr des Überfaltens der Dichtlippe verringert und die Dichtwirkung im Eckbereich verbessert. Gleichzeitig bleibt die zuverlässige Dichtwirkung durch die in den an den Eckbereich anschließenden Abschnitten der Dichtungsanordnung angeordnete Dichtlippe mit regulärer (nicht gekürzter) vom Basiskörper weggerichteter Erstreckung erhalten.

Die Dichtlippe kann hierbei durchgehend fortlaufend über den Eckbereich sowie die angrenzenden Bereiche erstreckend ausgeführt sein. Sie kann jedoch auch in einzelnen, nicht miteinander verbundenen Abschnitten ausgeführt sein. Die Dichtlippe erstreckt sich vorzugsweise im Wesentlichen rechtwinklig von dem Basiskörper weg.

Die Dichtlippe der Dichtungsanordnung ist vorzugsweise aus elastomeren Werkstoffen hergestellt. Auch der Basiskörper kann aus Elastomeren hergestellt sein. Er kann jedoch auch metallische Bestandteile oder Abschnitte aufweisen.

Bevorzugt weist der Nutzfahrzeugaufbau eine Dichtungsanordnung auf, die an zumindest einem eine Ecke umfassenden Randabschnitt des Schließ- und Wandungsteils angeordnet ist. Die Dichtungsanordnung wird somit beim Öffnen des Schließ- und Wandungsteils aus dem restlichen Nutzfahrzeugaufbau entfernt. Der Rand der Öffnung kann somit ohne Dichtungsanordnung bleiben und dennoch eine Abdichtung herbeigeführt werden. Beim Betreten oder Beladen des Nutzfahrzeugaufbaus wird somit die Gefahr einer Beschädigung der Dichtungsanordnung minimiert. Hierdurch wird die Zuverlässigkeit der Abdichtung des Nutzfahrzeugaufbaus erhöht.

Vorzugsweise überbrückt die Dichtlippe der Dichtungsanordnung in der Verschlussposition im Eckbereich den Abstand zwischen Schieß- und Wandungsteil und dem Rand der Öffnung vollständig. Hierdurch wird trotz der im Eckbereich verkürzten Dichtlippe eine Abdichtung der Öffnung in der Verschlussposition des Schließ- und Wandungsteils sichergestellt. Entsprechend ist die verkürzte Dichtlippe im Eckbereich derart auszugestalten, dass in der Verschlussposition dennoch überall im Eckbereich eine Überbrückung des Abstandes durch die Dichtungsanordnung gewährleistet bleibt. Andernfalls kann es zur Ausbildung eines Leckagepfades kommen.

Vorteilhafterweise weist die Dichtlippe der Dichtungsanordnung in der Verschlussposition im Eckbereich eine geringe Überdeckung, geringer als in anderen Bereichen der Dichtungsanordnung außerhalb eines Eckbereich, des Randes der Öffnung auf. Es kommt zu einer geringeren Verformung der Dichtlippe im Eckbereich. Die Gefahr eines Faltenwurfs und somit auch die Gefahr der Ausbildung eines Leckagepfades werden verringert. Besonders bevorzugt weist die Dichtlippe im Eckbereich keine Überdeckung des Randes der Öffnung auf. In diesem Fall stößt die Dichtlippe passgenau an den Rand der Öffnung und dichtet diesen ab. Die Gefahr eines Faltenwurfs wird beseitigt.

Bevorzugt verläuft die Dichtlippe im Eckbereich parallel zum jeweiligen Abschnitt des Basiskörpers. Hierdurch kann eine erfindungsgemäße Dichtlippe besonders leicht realisiert werden. Die Abmessungen der Dichtlippe im Eckbereich sind konstant.

In einer alternativen Ausführungsform ist die Dichtlippe im Eckbereich gegenüber dem Basiskörper schräg verlaufend angeordnet. Somit wird ein gradueller Übergang im Eckbereich geschaffen und die bessere Dichtwirkung von Dichtlippen mit einer größeren Überdeckung des Randes der Öffnung länger bewahrt. Ein Winkel zwischen 10 und 30° hat sich hierbei als besonders vorteilhaft erwiesen.

Vorzugsweise bildet die Dichtlippe im Eckbereich eine Ecke aus. Besonders bevorzugt ist diese Ecke rechtwinklig. Die Ecke der Dichtlippe passt besonders gut in eine entsprechende Ecke einer üblicherweise rechteckigen Öffnung eines Nutzfahrzeugaufbaus. Hierdurch wird eine zuverlässige Abdichtung des Nutzfahrzeugaufbaus in einer Verschlussposition gewährleistet. Die Ecke kann hierbei einen kleinen fertigungs- bzw. toleranzbedingten Radius aufweisen.

Mit Vorteil weist der Nutzfahrzeugaufbau eine Dichtungsanordnung mit 3 bis 8, vorzugsweise 4 bis 6, quer zu ihrem Verlauf voneinander beabstandeten Dichtlippen auf. Die genaue Anzahl der Dichtlippen hängt von der Breite des Schließ- und Dichtelementes, sowie der Breite und Erstreckung der einzelnen Dichtlippen ab. Die Dichtlippen sind hierbei vorzugsweise parallel zueinander an dem Basiskörper angeordnet. Durch das Vorsehen mehrerer, vorzugsweise zueinander parallel verlaufender Dichtlippen, werden in einer Verschlussposition zwischen den einzelnen Dichtlippen mehrere voneinander getrennte Kammern gebildet, in denen Luft eingeschlossen wird. Hierdurch wird die Dichtwirkung der Dichtungsanordnung verbessert und ein Nutzfahrzeugaufbau mit verbesserter Dichtheit geschaffen.

Vorteilhafterweise weisen mehrere der Dichtlippen, vorzugsweise jede der Dichtlippen, im Eckbereich eine geringere vom Basiskörper weggerichtete Erstreckung auf, als in zumindest einem außerhalb des Eckbereichs angeordneten Bereich der jeweiligen Dichtlippe. Zwar kann schon eine erfindungsgemäß ausgestaltete Dichtlippe der Dichtungsanordnung, die in der Verschlussposition im Eckbereich keinen Faltenwurf zeigt, das Ausbilden eines Leckagepfades verhindern und Dichtheit des Nutzfahrzeugaufbaus verbessern. Diese Wirkung wird verstärkt, wenn mehrere oder alle Dichtlippen erfindungsgemäß derart ausgestaltet sind, dass eine Faltenbildung im Eckbereich reduziert bzw. ganz verhindert wird.

Bevorzugt weist die Dichtungsanordnung eine Staublippe auf, die in einer Verschlussposition des Schließ- und Wandungsteils die Öffnung außen abdeckt. Diese Staublippe ist in der Verschlussposition des Schließ- und Wandungsteils nicht in die Öffnung eingebracht, sondern überdeckt die Öffnung auf der Außenseite des Nutzfahrzeugaufbaus. Die Staublippe verringert so die Gefahr des Eindringens von Staub und Schmutz in Dichtungsbereich. Durch die Verringerung der Verschmutzungsgefahr wird die Zuverlässigkeit der Abdichtung des Nutzfahrzeuges erhöht.

Die Aufgabe wird ebenfalls durch eine erfindungsgemäße Dichtungsanordnung zur Verwendung in einem Nutzfahrzeug gemäß Anspruch 11 gelöst. Diese weist eine in einem Eckbereich verkürzte Dichtlippe auf.

Vorzugsweise ist die Dichtungsanordnung rechteckig. Hierdurch kann sie um vorzugsweise rechteckige Schließ- und Wandungsteile eines Nutzfahrzeugaufbaus herum angeordnet werden. Die gerade verlaufenden Abschnitte der rechteckigen Dichtungsanordnung mit einer oder mehreren entsprechend gerade verlaufenden Dichtlippen ermöglicht eine zuverlässige Abdichtung in diesen Abschnitten. Weiterhin ist die Anordnung einer im Eckbereich verkürzten Dichtlippe bei einer rechtwinkligen Anordnung der Dichtungsanordnung besonders vorteilhaft, da hierbei andernfalls besonders große Verformungen im Eckbereich an der Dichtlippe auftreten.

Durch die Verkürzung der Dichtlippe im Eckbereich können diese reduziert bzw. gänzlich vermieden werden.

Bevorzugt weist die Dichtungsanordnung eine Dichtlippe auf, die im Eckbereich eine 15 bis 40 %, vorzugsweise 20 bis 30 % geringere Erstreckung vom Basiskörper weg als in einem außerhalb des Eckbereichs befindlichen Bereich der Dichtungsanordnung aufweist. Eine derartige Verkürzung hat sich als besonders vorteilhaft für eine zuverlässige Abdichtung herausgestellt. Üblicherweise ist die Dichtlippe einer Dichtungsanordnung etwa 50 % länger als der von der Dichtlippe in der Benutzung zu überbrückende Abstand ausgeführt, um eine ausreichende Überdeckung zu gewährleisten. Die entsprechende Kürzung der Dichtlippe im Eckbereich reduziert die Überdeckung und bewirkt eine geringere Gefahr eines Überfaltens der Dichtlippe. Der genaue Wert der Verkürzung hängt somit im Einzelfall von der Ausgestaltung bzw. Auslegung der Dichtlippe ab.

Vorzugsweise verläuft die Dichtlippe der Dichtungsanordnung im Eckbereich parallel zum jeweiligen Abschnitt des Basiskörpers. Hierdurch kann eine erfindungsgemäße Dichtlippe besonders leicht realisiert werden. Die Abmessungen der Dichtlippe im Eckbereich sind konstant.

In einer alternativen Ausführungsform ist die Dichtlippe der Dichtungsanordnung im Eckbereich gegenüber dem Basiskörper schräg verlaufend angeordnet. Somit wird ein gradueller Übergang im Eckbereich geschaffen und die bessere Dichtwirkung einer Dichtlippe mit einer größeren Überdeckung des Randes der Öffnung länger bewahrt. Ein Winkel zwischen 10 und 30° hat sich hierbei als besonders vorteilhaft erwiesen.

Mit Vorteil umfasst die Dichtungsanordnung zumindest ein Eckverbindungsstück sowie zumindest zwei jeweils an einer Seite des Eckverbindungsstücks angeordnete Anschlussprofile. Hierdurch kann eine erfindungsgemäße Dichtungsanordnung auf besonders einfache Weise realisiert werden, in dem ein entsprechend vorbereitetes bzw. vorbereitbares Eckverbindungsstück mit entsprechenden Anschlussprofilen zur Dichtungsanordnung angeordnet wird.

Vorzugsweise ist das Eckverbindungsstück als Formteil ausgebildet. Somit kann das für die einfache Herstellung einer erfindungsgemäßen Dichtungsanordnung vorzugsweise zu verwendende Eckverbindungsstück auf besonders einfache und kostengünstige Weise in großen Stückzahlen und gleichbleibender Qualität hergestellt werden. Ein derartiges Formteil kann beispielsweise spritzgegossen werden.

Bevorzugt weist das Eckverbindungsstück zumindest einen Übergangsbereich auf, in dem ein Dichtlippenabschnitt in einen Dichtlippenabschnitt anderer Erstreckung übergeht. Dadurch, dass der Übergangsbereich im Eckverbindungsstück angeordnet wird, kann ein entsprechender Übergang vorgefertigt werden und somit eine zuverlässig abdichtende erfindungsgemäße Dichtungsanordnung mit im Eckbereich verkürzten Dichtlippenabschnitt auf einfach Weise bereitgestellt werden.

Mit Vorteil sind die Anschlussprofile als Extrusionsprofile ausgebildet. Durch die Ausbildung der Anschlussprofile als Extrusionsprofile können diese Profile auf einfache und kostengünstige Weise bereitgestellt und jeweils auf die benötige Länge für die jeweilige Dichtungsanordnung zurechtgeschnitten werden.

Alternativ kann die Dichtungsanordnung auch aus zumindest zwei zueinander auf Gehrung geschnittenen Dichtungsprofilen gebildet sein, die im Eckbereich einen Stoß aufweisen und dort gefügt sind. Hierdurch kann eine erfindungsgemäße Dichtungsanordnung durch die oben bereits beschriebenen Extrusionsprofile, die besonders einfach in großen Längen hergestellt werden können, gebildet werden. Zwei auf Gehrung geschnittene Extrusionsprofile werden hierbei im Stoß verbunden. Das Verbinden kann beispielsweise durch Kleben oder Schweißen erfolgen. Anschließend oder auch vorher werden die Dichtungslippen der Extrusionsprofile im Eckbereich auf die gewünschte Länge gegenüber einem weiteren Abschnitt der Dichtungsanordnung gekürzt.

Vorzugsweise weist die Dichtungsanordnung 3 bis 8, besonders vorzugsweise 4 bis 6, quer zu ihrem Verlauf voneinander beabstandete Dichtlippen auf. Durch das Vorsehen mehrere Dichtlippen kann die Dichtwirkung und die Zuverlässigkeit der Dichtungsanordnung erhöht werden, da auch bei lokaler Beschädigung einer oder gegebenenfalls auch mehrere Dichtlippen durch die weiteren Dichtlippen eine ausreichende Dichtwirkung erzielt wird.

Bevorzugt weisen mehrere Dichtlippen der Dichtungsanordnung, besonders bevorzugt jede der Dichtlippen, im Eckbereich eine geringere vom Basiskörper weggerichtete Erstreckung auf als in zumindest einem außerhalb des Eckbereichs angeordnetem Bereich der jeweiligen Dichtlippe. Die Dichtwirkung der Dichtungsanordnung wird verbessert, wenn mehrere oder alle Dichtlippen erfindungsgemäß derart ausgestaltet sind, dass eine Faltenbildung im Eckbereich reduziert bzw. ganz verhindert wird. Die Gefahr der Ausbildung eines Leckagepfades im Eckbereich wird durch das vorsehen mehrere entsprechend ausgestalteter Dichtlippen reduziert bzw. eliminiert.

Vorzugsweise weit die Dichtungsanordnung eine außen am Basiskörper angeordnete Staublippe auf. Diese Staublippe wird legt sich außen um einen abzudichtenden Bereich und deckt den abzudichtenden Bereich gegenüber Staub und/oder Schmutz ab. Hierdurch wird der Bereich sauberer gehalten und die Dichtungsanordnung erzielt eine zuverlässigere Dichtwirkung. Die Staublippe wird nicht wie eine Dichtlippe umgebogen. Daher besteht auch keine Gefahr einer Materialanhäufung bzw. eines Überfaltens. Die Staublippe wird vorzugsweise mit einer gleichbleibenden Erstreckung ausgeführt.

Weitere vorteilhafte Ausgestaltungen der Erfindung ergeben sich aus den weiteren Unteransprüchen, der nachfolgenden Beschreibung und der Zeichnung. Es zeigen:
- Fig. 1: eine schematische Darstellung eines erfindungsgemäßen Nutzfahrzeugaufbaus von hinten mit einem Schließ- und Wandungsteil in einer Öffnungsposition;
- Fig. 2: einen Ausschnitt aus Fig. 1, umfassend einen Eckbereich;
- Fig. 3: eine Darstellung eines Nutzfahrzeugaufbaus gemäß Fig. 1 mit den Schließ- und Wandungsteilen in einer Verschlussposition;
- Fig. 4: einem Ausschnitt aus Fig. 3, umfassend einen Eckbereich;
- Fig. 5: eine erfindungsgemäße Dichtungsanordnung in einer ersten Ausführungsform;
- Fig. 6: eine erfindungsgemäße Dichtungsanordnung in einer weiteren Ausführungsform.

In der Zeichnung sind grundsätzlich gleichwirkende Teile mit übereinstimmenden Bezugsziffern versehen, sofern dies sinnvoll ist. Die nachfolgend beschriebenen Merkmale der Ausführungsbeispiele können auch in anderen Merkmalskombinationen als dargestellt Gegenstand der Erfindung sein.

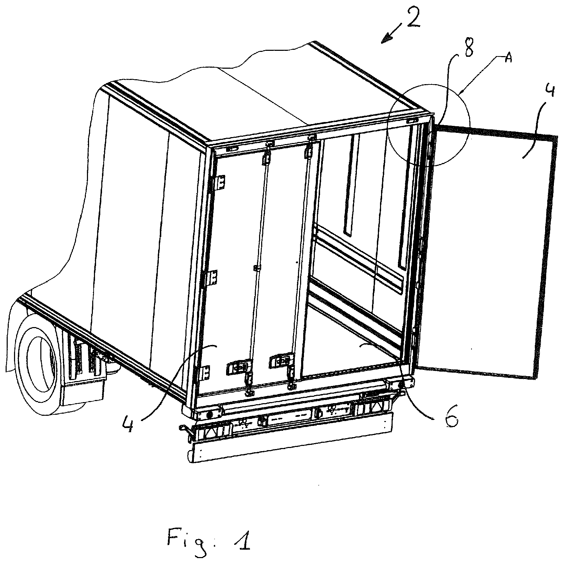

Fig. 1 zeigt einen erfindungsgemäßen Nutzfahrzeugaufbau 2. Der Nutzfahrzeugaufbau 2 weist eine Öffnung 6 auf, die mit einem Schließ- und Wandungsteil 4 in einer Verschlussposition verschließbar ist. Vorliegend ist die Öffnung 6 bzw. das Schließ- und Wandungsteil 4 als Hecköffnung des Nutzfahrzeugaufbaus 2 ausgeführt. Diese Hecköffnung kann durch zwei in ihrer jeweiligen Verschlussposition zusammenwirkende Schließ- und Wandungsteile 4 (Hecktüren) verschlossen werden. Um den Umfang der Schließ- und Wandungsteile 4 erstrecken sich jeweils Dichtungsanordnungen 10. Insbesondere erstrecken sich die Dichtungsanordnung 10 auch über Ecken der Schließ- und Wandungsteile 4. Die Dichtungsanordnungen 10 umfassen Dichtlippen 14. An den Ecken des Schließ- und Wandungsteils 4 befindet sich Eckbereiche 16 der Dichtungsanordnungen 10.

In dem Bereich, in dem die beiden Schließ- und Wandungsteile in ihrer jeweiligen Verschlussposition aneinander stoßen, ist nur die Dichtungsanordnung 10 eines Schließ- und Wandungsteils 4 mit Dichtlippen 14 versehen. Die Dichtungsanordnung 10 des anderen Schließ- und Wandungsteils 4 bildet eine mit den Dichtlippen 14 des anderen Schließ- und Wandungsteils 4 in der Verschlussposition zusammenwirkende Dichtfläche aus.

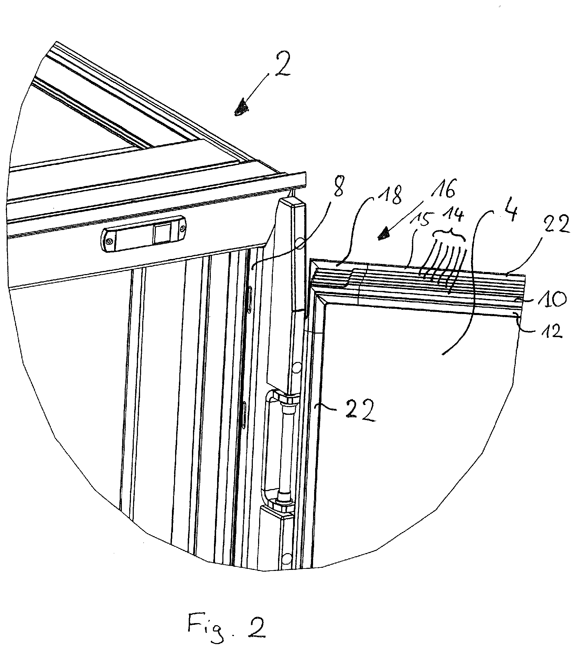

Ein solcher Eckbereich 16 ist in Fig. 2 vergrößert dargestellt. Im Eckbereich 16 der Dichtungsanordnung 10 ist ein Eckverbindungsstück 18 angeordnet. Deutlich sind die im Eckbereich 16 verkürzten Dichtlippen 14 sowie die Übergangsbereiche 20 zu erkennen. Im Ausführungsbeispiel der Fig. 2 weist die Dichtungsanordnung 10 sechs Dichtlippen 14 auf. Es können jedoch auch mehr oder weniger Dichtlippen 14 vorgesehen werden. Die Dichtlippen 14 erstrecken sich von einem Basiskörper 12 weggerichtet in der Ebene des Schließ- und Wandungsteils 4. Die im Eckbereich 16 verkürzten Dichtlippen 14 verlaufen parallel zu dem Basiskörper 12 und bilden im Eckbereich einen rechten Winkel. Die Dichtungsanordnung 10 weist neben den Dichtlippen 14 zudem noch eine Staublippe 15 auf.

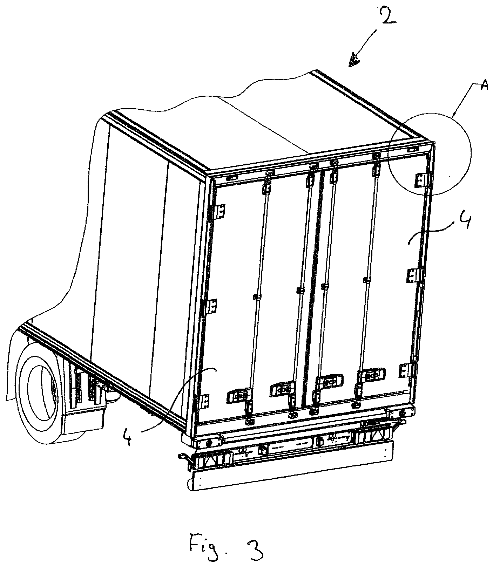

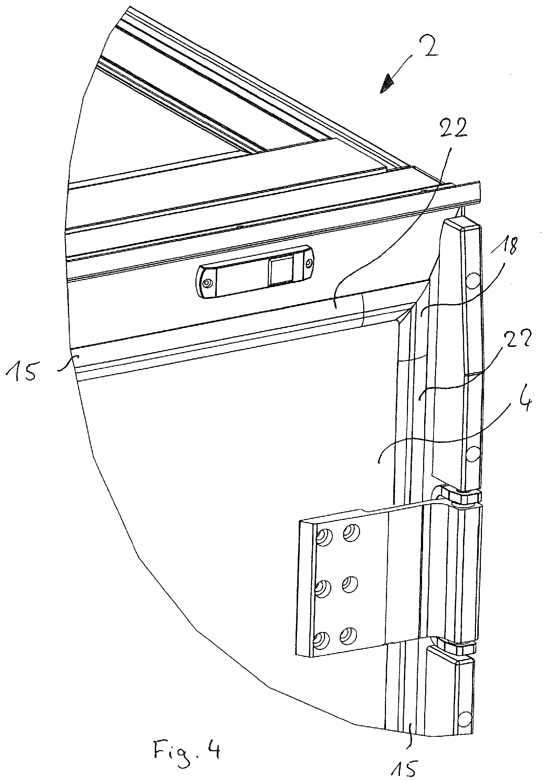

In Fig. 3 sowie der vergrößerten Darstellung des Eckbereichs 16 in Fig. 4 sind die Schließ- und Wandungsteile 4 in einer die Öffnung 6 verschließenden Verschlussposition dargestellt. In der Verschlussposition liegen die Dichtlippen 14 der Dichtungsanordnung 10 am Rand 8 der Öffnung 6 an und sind hierbei in weiten Teilen umgebogen. Die Staublippe 15 liegt hingegen außen an dem Nutzfahrzeugaufbau 2 an. Diese weist keine Verkürzungen im Eckbereich 16 auf.

Die Dichtlippen 14 der Dichtungsanordnung 10 erstrecken sich in der Ebene des Schließ- und Wandungsteils 4 von diesem weg. In der Verschlussposition des Schließ- und Wandungsteils 4 liegen die Dichtlippen 14 an dem Rand 8 der Öffnung 6 an. Hierdurch wird eine Abdichtung der Öffnung 6 bewirkt. Die Dichtlippen 14 weisen dementsprechend eine Erstreckung von dem Schließ- und Wandungsteil 4 auf, die ausreichend lang ist, um den Abstand zum Rand der Öffnung 8 zu überbrücken. Vorzugsweise sind die Dichtlippen jedoch signifikant länger ausgeführt. Insbesondere die Dichtlippen 14 an den gerade verlaufenden Abschnitten des Schließ- und Wandungsteils 4 weisen eine Länge auf, bei der die Dichtlippen 14 in einer Verschlussposition des Schließ- und Wandungsteils 4 am Rand 8 der Öffnung 6 derart umgebogen sind, dass sich eine große Kontaktfläche zwischen Dichtlippe 14 und Rand 8 der Öffnung 6 ergibt. Zwischen den Dichtlippen 14 und dem Rand 8 der Öffnung 6 bilden sich in einer Verschlussposition des Schließ- und Wandungsteils 4 luftgefüllte Kanäle aus. Dem gegenüber ist bei dem erfindungsgemäßen Nutzfahrzeugaufbau 2 die Erstreckung der Dichtlippen 14 im Eckbereich 16 verkürzt. Hierdurch treten im Eckbereich 16 geringere Verformungen der Dichtlippen 14 auf. Eine Materialanhäufung bei der Verformung der Dichtlippen 14 wird vermindert und die Dichtwirkung der Dichtungsanordnung 10 im Eckbereich 16 verbessert. Möglich ist auch, dass die Dichtlippen 14 im Eckbereich 16 so ausgestaltet sind, dass sie den Rand 8 der Öffnung 6 lediglich berühren und somit nicht umgebogen werden.

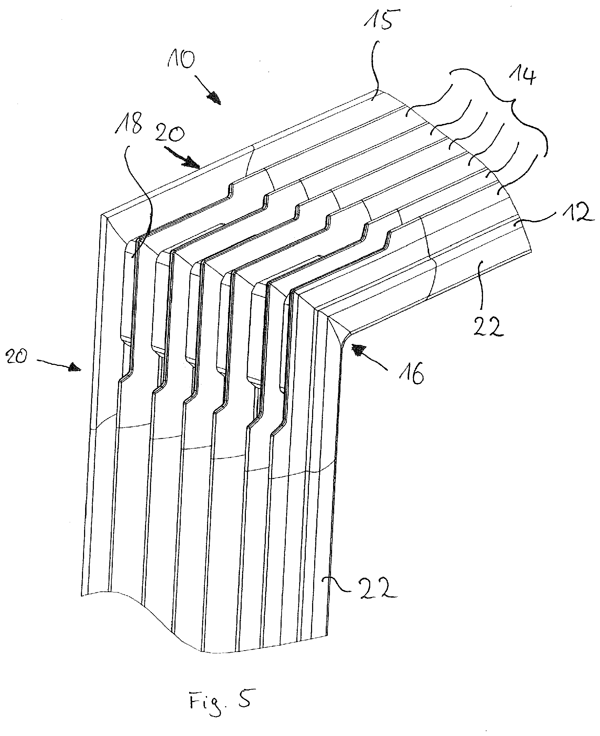

Fig. 5 zeigt eine erfindungsgemäße Dichtungsanordnung 10 in einem ersten Ausführungsbeispiel. In diesem Ausführungsbeispiel weist die Dichtungsanordnung 10 im Eckbereich 16 ein Eckverbindungsstück 18 auf. An dem Eckverbindungsstück 18 ist ein Übergangsbereich 20 angeordnet, bei dem ein Abschnitt einer Dichtlippe 14 mit großer Erstreckung vom Basiskörper 12 in einen Abschnitt mit einer geringen Erstreckung übergeht. Die Verwendung eines derartigen Eckverbindungsstückes 18 mit einem Übergangsbereich 20 vereinfacht die Konstruktion einer erfindungsgemäßen Dichtungsanordnung 10. An das Eckverbindungsstück 18, das vorzugsweise als Formteil ausgebildet ist, können vorzugsweise als Extrusionsbauteil ausgebildete Anschlussprofile 22 angeschlossen werden, um eine erfindungsgemäße Dichtungsanordnung 10 zu realisieren. Durch die Verwendung eines Eckverbindungsstückes 18 können die Dichtlippen 14 im Eckbereich 16 so vorbereitet werden, dass die Dichtungsanordnung 10 eine zuverlässige Dichtwirkung entfalten kann.

Der Übergangsbereich 20 muss nicht Teil des Eckverbindungsstückes 18 sein, sondern kann auch im Bereich der Anschlussprofile 22 geschaffen werden. Hierzu ist jedoch üblicherweise ein erhöhter Fertigungsaufwand bzw. ein Zuschnitt der Dichtlippen 14 der Anschlussprofile 22 im an das Verbindungsstück 18 anschließenden Bereich notwendig.

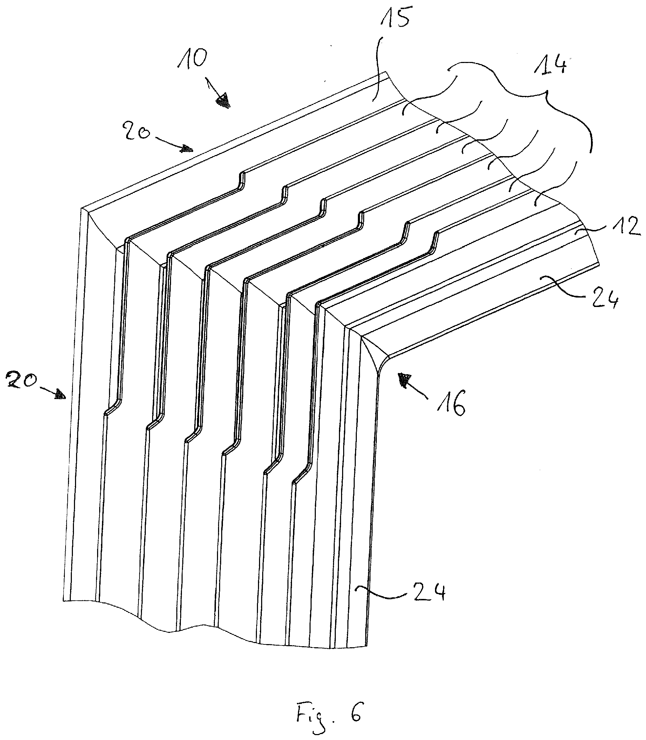

Fig. 6 zeigt eine Dichtungsanordnung 10 in einer alternativen Ausführungsform. Die Dichtungsanordnung 10 wird hierbei durch zwei Dichtungsprofile 24 geschaffen, die auf Gehrung geschnitten und zu einer Ecke gefügt worden sind. Die Dichtungsprofile 24 können hierbei durch Kleben, Schweißen oder andere geeignete Verbindungsverfahren verbunden werden. Die Dichtungsanordnung 10 in Fig. 3 weist ebenfalls einen Eckbereich 16 auf, in dem die Dichtlippen 14 eine geringere Erstreckung aufweisen als in den angrenzenden Bereichen. Die Dichtungsprofile 24 der Dichtungsanordnung sind vorliegend als Extrusionsprofile ausgeführt. Die erfindungsgemäßen Dichtungsanordnung 10 wurde durch eine nachträgliche Kürzung der Dichtlippen 14 der Dichtungsprofile 24 im Eckbereich 16 geschaffen. Zwischen Eckbereich 16 und den anderen Bereichen der Dichtungsanordnung 10 bildet sich ein Übergangsbereich 20 aus.

## Patentansprüche

1. Nutzfahrzeugaufbau (2), insbesondere in Form eines Kühlkoffers, mit zumindest einer durch ein Schließ- und Wandungsteil (4) in einer Verschlussposition zu verschließenden Öffnung (6), wobei das Schließ- und Wandungsteil (4) in der Verschlussposition von einem Rand (8) der Öffnung (6) beabstandet ist, und an der Öffnung (6) und/oder dem Schließ- und Wandungsteil (4) eine in der Verschlussposition den Abstand zumindest bereichsweise überbrückende und abdichtende Dichtungsanordnung (10) angeordnet ist, die einen Basiskörper (12) und zumindest eine an dem Basiskörper (12) angeordnete Dichtlippe (14) aufweist, deren vom Basiskörper (12) weggerichtete Erstreckung größer ist als der Abstand zwischen dem Schließ- und Wandungsteil (4) und dem Rand (8) der Öffnung (6), und die diesen Abstand in der Verschlussposition überbrückt, und die zumindest zwei, vorzugsweise rechtwinklig zueinander angeordnete Abschnitte umfasst, die über einen Eckbereich (16) miteinander verbunden sind, wobei die Dichtlippe (14) über die zumindest zwei Abschnitte sowie den Eckbereich (16) verläuft, **dadurch gekennzeichnet, dass** die Dichtlippe (14) im Eckbereich (16) eine geringere vom Basiskörper (12) weggerichtete Erstreckung aufweist als in zumindest einem außerhalb des Eckbereichs (16) angeordneten Bereich der Dichtungsanordnung (10).

2. Nutzfahrzeugaufbau nach Anspruch 1, **dadurch gekennzeichnet, dass** die Dichtungsanordnung (10) an zumindest einem eine Ecke umfassenden Randabschnitt des Schließ- und Wandungsteils (4) angeordnet ist.

3. Nutzfahrzeugaufbau nach Anspruch 1 oder 2, **dadurch gekennzeichnet, dass** die Dichtlippe (14) der Dichtungsanordnung (10) in der Verschlussposition im Eckbereich (16) den Abstand zwischen Schließ- und Wandungsteil (4) und dem Rand (8) der Öffnung (6) vollständig überbrückt.

4. Nutzfahrzeugaufbau nach einem der Ansprüche 1 bis 3, **dadurch gekennzeichnet, dass** die Dichtlippe (14) der Dichtungsanordnung (10) in der Verschlussposition im Eckbereich (16) eine geringere Überdeckung des Randes (8) der Öffnung (6) aufweist als in einem Bereich außerhalb des Eckbereichs (16), wobei die Dichtlippe (14) bevorzugt keine Überdeckung des Randes (8) der Öffnung (6) aufweist.

5. Nutzfahrzeugaufbau nach einem der Ansprüche 1 bis 4, **dadurch gekennzeichnet, dass** die Dichtlippe (14) im Eckbereich (16) parallel zum jeweiligen Abschnitt des Basiskörpers (12) verlaufend angeordnet ist.

6. Nutzfahrzeugaufbau nach einem der Ansprüche 1 bis 4, **dadurch gekennzeichnet, dass** die Dichtlippe (14) im Eckbereich (16), vorzugsweise unter einem Winkel von 10 bis 30°, schräg verlaufend angeordnet ist.

7. Nutzfahrzeugaufbau nach einem der Ansprüche 1 bis 6, **dadurch gekennzeichnet, dass** die Dichtlippe (14) im Eckbereich (16) eine, vorzugsweise rechtwinklige, Ecke ausbildet.

8. Nutzfahrzeugaufbau nach einem der Ansprüche 1 bis 7, **dadurch gekennzeichnet, dass** die Dichtungsanordnung (10) drei bis acht, vorzugsweise vier bis sechs, quer zur ihrem Verlauf voneinander beanstandete Dichtlippen (14) aufweist.

9. Nutzfahrzeugaufbau nach Anspruch 8, **dadurch gekennzeichnet, dass** mehrere der Dichtlippen (14), vorzugsweise jede der Dichtlippen (14), im Eckbereich eine geringere vom Basiskörper (12) weggerichtete Erstreckung aufweist als in zumindest einem außerhalb des Eckbereichs (16) angeordnetem Bereich der jeweiligen Dichtlippe (14).

10. Nutzfahrzeugaufbau nach einem der Ansprüche 1 bis 9, **dadurch gekennzeichnet, dass** die Dichtungsanordnung (10) eine in der Verschlussposition des Schließ- und Wandungsteils (4) die Öffnung (6) außen abdeckende Staublippe (15) aufweist.

11. Dichtungsanordnung zur Verwendung in einem Nutzfahrzeugaufbau (2), insbesondere einem Kühlkoffer, umfassend einen Basiskörper (12) sowie zumindest eine an dem Basiskörper (12) angeordnete Dichtlippe (14), die eine vom Basiskörper (12) weggerichtete Erstreckung aufweist, wobei die Dichtungsanordnung (10) zumindest zwei, vorzugsweise rechtwinklig zueinander angeordnete Abschnitte umfasst, die über einen Eckbereich (16) miteinander verbunden sind, und wobei die Dichtlippe (14) über die zumindest zwei Abschnitte sowie den Eckbereich verläuft, **dadurch gekennzeichnet, dass** die Dichtlippe (14) im Eckbereich (16) eine geringere vom Basiskörper (12) weggerichtete Erstreckung aufweist als in zumindest einem außerhalb des Eckbereichs (16) angeordnetem Bereich der Dichtungsanordnung (10).

12. Dichtungsanordnung nach Anspruch 11, **dadurch gekennzeichnet, dass** die Dichtungsanordnung (10) rechteckig ist.

13. Dichtungsanordnung nach Anspruch 11 oder 12, **dadurch gekennzeichnet, dass** die Dichtlippe (14) im Eckbereich (16) eine 15 bis 35 %, vorzugsweise 20 bis 30 %, geringere Erstreckung als in einem außerhalb des Eckbereichs (16) befindlichen Bereich der Dichtungsanordnung (10) aufweist.

14. Dichtungsanordnung nach einem der Ansprüche 11 bis 13, **dadurch gekennzeichnet, dass** die Dichtlippe (14) im Eckbereich (16) parallel zum jeweiligen Abschnitt des Basiskörpers (12) verlaufend angeordnet ist.

15. Dichtungsanordnung nach einem der Ansprüche 11 bis 13, **dadurch gekennzeichnet, dass** die Dichtlippe (14) im Eckbereich (16), vorzugsweise unter einem Winkel von 10 bis 30°, schräg verlaufend angeordnet ist.

16. Dichtungsanordnung nach einem der Ansprüche 11 bis 15, umfassend zumindest ein Eckverbindungsstück (18) sowie zumindest zwei jeweils an einer Seite des Eckverbindungsstücks (18) angeordnete Anschlussprofile (22).

17. Dichtungsanordnung nach Anspruch 16, **dadurch gekennzeichnet, dass** das Eckverbindungsstück (18) als Formteil ausgebildet ist.

18. Dichtungsanordnung nach Anspruch 16 oder 17, **dadurch gekennzeichnet, dass** das Eckverbindungsstück (18) zumindest einen Übergangsbereich (20) aufweist, in dem ein Dichtlippenabschnitt in einen Dichtlippenabschnitt anderer Erstreckung übergeht.

19. Dichtungsanordnung nach einem der Ansprüche 16 bis 18, **dadurch gekennzeichnet, dass** die Anschlussprofile (22) als Extrusionsprofile ausgebildet sind.

20. Dichtungsanordnung nach einem der Ansprüche 11 - 15, gebildet aus zumindest zwei zueinander auf Gehrung geschnitten, im Eckbereich einen Stoß aufweisenden und dort gefügten Dichtungsprofilen (24).

21. Dichtungsanordnung nach einem der Ansprüche 11 - 20, **dadurch gekennzeichnet, dass** die Dichtungsanordnung (10) drei bis acht, vorzugsweise vier bis sechs, quer zur ihrem Verlauf voneinander beanstandete Dichtlippen (14) aufweist.

22. Dichtungsanordnung nach Anspruch 20, **dadurch gekennzeichnet, dass** mehrere der Dichtlippen (14), vorzugsweise jede der Dichtlippen (14), im Eckbereich eine geringere vom Basiskörper (12) weggerichtete Erstreckung aufweisen als in zumindest einem außerhalb des Eckbereichs (16) angeordnetem Bereich der jeweiligen Dichtlippe (14).

23. Nutzfahrzeugaufbau nach einem der Ansprüche 11 bis 22, **dadurch gekennzeichnet, dass** die Dichtungsanordnung (10) eine außen am Basiskörper (12) angeordnete Staublippe (15) aufweist.

## Claims

1. Commercial vehicle body (2), in particular in the form of a refrigerated box, with at least one opening (6) to be closed by means of a closing and wall part (4) in a closed position, the closing and wall part (4) being spaced at a distance apart from an edge (8) of the opening (6) in the closed position, and disposed on the opening (6) and/or on the closing and wall part (4) bridging and sealing at least certain regions of the distance in the closed position is a seal arrangement (10) having a base body (12) and at least one sealing lip (14) disposed on the base body (12), the extension of which directed away from the base body (12) is greater than the distance between the closing and wall part (4) and the edge (8) of the opening (6) and which bridges this distance in the closed position, and which comprises at least two sections preferably disposed at a right angle to one another which are connected to one another via a corner region (16), the sealing lip (14) extending across the at least two sections as well as the corner region (16), **characterised in that** the sealing lip (14) has a shorter extension directed away from the base body (12) in the corner region (16) than in at least a region of the seal arrangement (10) disposed outside the corner region (16) .

2. Commercial vehicle body as claimed in claim 1, **characterised in that** the seal arrangement (10) is disposed on at least a peripheral section of the closing and wall part (4) incorporating a corner.

3. Commercial vehicle body as claimed in claim 1 or 2, **characterised in that** in the closed position, the sealing lip (14) of the seal arrangement (10) completely bridges the distance between the closing and wall part (4) and the edge (8) of the opening (6) in the corner region (16).

4. Commercial vehicle body as claimed in one of claims 1 to 3, **characterised in that** in the closed position, the sealing lip (14) of the seal arrangement (10) has a shorter overlap of the edge (8) of the opening (6) in the corner region (16) than in a region outside the corner region (16), the sealing lip (14) preferably having no overlap of the edge (8) of the opening (6).

5. Commercial vehicle body as claimed in one of claims 1 to 4, **characterised in that** in the corner region (16), the sealing lip (14) is disposed extending parallel with the respective section of the base body (12).

6. Commercial vehicle body as claimed in one of claims 1 to 4, **characterised in that** in the corner region (16), the sealing lip (14) is disposed extending obliquely, preferably at an angle of 10 to 30°.

7. Commercial vehicle body as claimed in one of claims 1 to 6, **characterised in that** in the corner region (16), the sealing lip (14) forms a preferably right-angled corner.

8. Commercial vehicle body as claimed in one of claims 1 to 7, **characterised in that** the seal arrangement (10) has three to eight, preferably four to six, sealing lips (14) spaced apart from one another transversely to its extension.

9. Commercial vehicle body as claimed in claim 8, **characterised in that** a number of the sealing lips (14), preferably each of the sealing lips (14), has a shorter extension directed away from the base body (12) in the corner region than in at least a region of the respective sealing lip (14) disposed outside the corner region (16).

10. Commercial vehicle body as claimed in one of claims 1 to 9, **characterised in that** the seal arrangement (10) has a dust lip (15) externally covering the opening (6) in the closed position of the closing and wall part (4).

11. Seal arrangement for use in a commercial vehicle body (2), in particular a refrigerated box, comprising a base body (12) and at least one sealing lip (14) disposed on the base body (12) which has an extension directed away from the base body (12), the seal arrangement (10) comprising at least two sections preferably disposed at a right angle to one another which are connected to one another via a corner region (16), and the sealing lip (14) extends across the at least two sections as well as the corner region, **characterised in that** the sealing lip (14) has a shorter extension directed away from the base body (12) in the corner region (16) than in at least a region of the seal arrangement (10) disposed outside the corner region (16).

12. Seal arrangement as claimed in claim 11, **characterised in that** the seal arrangement (10) is rectangular.

13. Seal arrangement as claimed in claim 11 or 12, **characterised in that** the sealing lip (14) has a 15 to 35 %, preferably 20 to 30 %, shorter extension in the corner region (16) than in a region of the seal arrangement (10) located outside the corner region (16).

14. Seal arrangement as claimed in one of claims 11 to 13, **characterised in that** the sealing lip (14) is disposed extending parallel with the respective section of the base body (12) in the corner region (16).

15. Seal arrangement as claimed in one of claims 11 to 13, **characterised in that** in the corner region (16), the sealing lip (14) is disposed extending obliquely, preferably at an angle of 10 to 30°.

16. Seal arrangement as claimed in one of claims 11 to 15, comprising at least one corner connecting piece (18) and at least two adjoining sections (22) disposed respectively on a side of the corner connecting piece (18).

17. Seal arrangement as claimed in claim 16, **characterised in that** the corner connecting piece (18) is provided in the form of a moulding.

18. Seal arrangement as claimed in claim 16 or 17, **characterised in that** the corner connecting piece (18) has at least one transition region (20) in which a sealing lip section merges into a sealing lip section of a differing extension.

19. Seal arrangement as claimed in one of claims 16 to 18, **characterised in that** the adjoining sections (22) are provided in the form of extruded sections.

20. Seal arrangement as claimed in one of claims 11 - 15, formed by at least two mitred seal sections (24) having a butt edge in the corner region where they are joined.

21. Seal arrangement as claimed in one of claims 11 - 20, **characterised in that** the seal arrangement (10) has three to eight, preferably four to six, sealing lips (14) spaced apart from one another transversely to its extension.

22. Seal arrangement as claimed in claim 20, **characterised in that** a number of the sealing lips (14), preferably each of the sealing lips (14), has a shorter extension directed away from the base body (12) in the corner region than in at least a region of the respective sealing lip (14) disposed outside the corner region (16)

23. Commercial vehicle body as claimed in one of claims 11 to 22, **characterised in that** the seal arrangement (10) has a dust lip (15) disposed on the outside of the base body (12) .

## Revendications

1. Carrosserie de véhicule utilitaire (2), en particulier sous la forme d'un coffre frigorifique, comprenant au moins une ouverture (6) qui doit être fermée dans une position de fermeture par une partie de paroi et de fermeture (4), la partie de paroi et de fermeture (4) étant dans la position de fermeture éloignée d'un bord (8) de l'ouverture (6), et au niveau de l'ouverture (6) et/ou de la partie de paroi et de fermeture (4) est disposé un dispositif de joint d'étanchéité (10), qui recouvre et rend étanche l'intervalle dans la position de fermeture au moins dans certaines zones et qui présente un corps de base (12) et au moins une lèvre d'étanchéité (14), qui est disposée sur le corps de base (12) avec une extension partant du corps de base (12) plus grande que l'intervalle entre la partie de paroi et de fermeture (4) et le bord (8) de l'ouverture (6) et qui recouvre cet intervalle dans la position de fermeture et qui comprend au moins deux sections, lesquelles sont disposées de préférence à angle droit l'une par rapport à l'autre et sont reliées l'une à l'autre par une zone d'angle (16), la lèvre d'étanchéité (14) s'étendant sur l'au moins deux sections ainsi que la zone d'angle (16), **caractérisée en ce que** la lèvre d'étanchéité (14) présente dans la zone d'angle (16) une extension partant du corps de base (12) qui est plus petite que dans au moins une zone du dispositif de joint d'étanchéité (10) disposée à l'extérieur de la zone d'angle (16) .

2. Carrosserie de véhicule utilitaire selon la revendication 1, **caractérisée en ce que** le dispositif de joint d'étanchéité (10) est disposé sur au moins une section de bord de la partie de paroi et de fermeture (4) qui comprend un angle.

3. Carrosserie de véhicule utilitaire selon la revendication 1 ou 2, **caractérisée en ce que** la lèvre d'étanchéité (14) du dispositif de joint d'étanchéité (10) recouvre entièrement l'intervalle dans la zone d'angle (16) dans la position de fermeture entre la partie de paroi et de fermeture (4) et le bord (8) de l'ouverture (6).

4. Carrosserie de véhicule utilitaire selon une des revendications 1 à 3, **caractérisée en ce que** la lèvre d'étanchéité (14) du dispositif de joint d'étanchéité (10) présente, dans la zone d'angle (16) dans la position de fermeture, un recouvrement du bord (8) de l'ouverture (6) qui est plus petit que dans une zone à l'extérieur de la zone d'angle (16), la lèvre d'étanchéité (14) ne présentant de préférence aucun recouvrement du bord (8) de l'ouverture (6).

5. Carrosserie de véhicule utilitaire selon une des revendications 1 à 4, **caractérisée en ce que** la lèvre d'étanchéité (14) est disposée dans la zone d'angle (16) parallèlement à la section respective du corps de base (12).

6. Carrosserie de véhicule utilitaire selon une des revendications 1 à 4, **caractérisée en ce que** la lèvre d'étanchéité (14) est disposée dans la zone d'angle (16) et s'étend de manière oblique, de préférence à un angle de 10 à 30°.

7. Carrosserie de véhicule utilitaire selon une des revendications 1 à 6, **caractérisée en ce que** la lèvre d'étanchéité (14) forme dans la zone d'angle (16) un angle, de préférence à angle droit.

8. Carrosserie de véhicule utilitaire selon une des revendications 1 à 7, **caractérisée en ce que** le dispositif de joint d'étanchéité (10) présente trois à huit, de préférence quatre à six, lèvres d'étanchéité (14) éloignées les unes des autres transversalement à leur tracé.

9. Carrosserie de véhicule utilitaire selon la revendication 8, **caractérisée en ce que** plusieurs des lèvres d'étanchéité (14), de préférence chacune des lèvres d'étanchéité (14), présentent dans la zone d'angle une extension partant du corps de base (12) qui est plus petite que dans au moins une zone de la lèvre d'étanchéité (14) respective disposée à l'extérieur de la zone d'angle (16).

10. Carrosserie de véhicule utilitaire selon une des revendications 1 à 9, **caractérisée en ce que** le dispositif de joint d'étanchéité (10) présente une lèvre anti-poussière (15) recouvrant l'ouverture (6) à l'extérieur dans la position de fermeture de la partie de paroi et de fermetures (4).

11. Dispositif de joint d'étanchéité destiné à une utilisation dans une carrosserie de véhicule utilitaire (2), en particulier un coffre frigorifique, comprenant un corps de base (12) ainsi qu'au moins une lèvre d'étanchéité (14), disposée sur le corps de base (12) et qui présente une extension partant du corps de base (12), le dispositif de joint d'étanchéité (10) comprenant au moins deux sections, qui sont disposées de préférence à angle droit l'une par rapport à l'autre et qui sont reliées l'une à l'autre par une zone d'angle (16), et la lèvre d'étanchéité (14) s'étendant sur l'au moins deux sections ainsi que la zone d'angle, **caractérisé en ce que** la lèvre d'étanchéité (14) présente dans la zone d'angle (16) une extension partant du corps de base (12) qui est plus petite que dans au moins une zone du dispositif de joint d'étanchéité (10) disposée à l'extérieur de la zone d'angle (16).

12. Dispositif de joint d'étanchéité selon la revendication 11, **caractérisé en ce que** le dispositif de joint d'étanchéité (10) est rectangulaire.

13. Dispositif de joint d'étanchéité selon la revendication 11 ou 12, **caractérisé en ce que** la lèvre d'étanchéité (14) présente dans la zone d'angle (16) une extension plus petite de 15 à 35 %, de préférence de 20 à 30 %, que dans une zone du dispositif de joint d'étanchéité (10) qui se trouve à l'extérieur de la zone d'angle (16).

14. Dispositif de joint d'étanchéité selon une des revendications 11 à 13, **caractérisé en ce que** la lèvre d'étanchéité (14) est disposée dans la zone d'angle (16) parallèlement à la section respective du corps de base (12).

15. Dispositif de joint d'étanchéité selon une des revendications 11 à 13, **caractérisé en ce que** la lèvre d'étanchéité (14) est disposée dans la zone d'angle (16) et s'étend de manière oblique, de préférence à un angle de 10 à 30°.

16. Dispositif de joint d'étanchéité selon une des revendications 11 à 15, comprenant au moins une pièce de liaison d'angle (18) ainsi qu'au moins deux profilés de raccordement (22) disposés respectivement sur un côté de la pièce de liaison d'angle (18).

17. Dispositif de joint d'étanchéité selon la revendication 16, **caractérisé en ce que** la pièce de liaison d'angle (18) est réalisée sous la forme d'une pièce moulée.

18. Dispositif de joint d'étanchéité selon la revendication 16 ou 17, **caractérisé en ce que** la pièce de liaison d'angle (18) présente au moins une zone de transition (20) dans laquelle une section de lèvre d'étanchéité passe dans une section de lèvre d'étanchéité d'une autre extension.

19. Dispositif de joint d'étanchéité selon une des revendications 16 à 18, **caractérisé en ce que** les profilés de raccordement (22) sont réalisés sous la forme de profilés d'extrusion.

20. Dispositif de joint d'étanchéité selon une des revendications 11 à 15, formé à partir d'au moins deux profilés d'étanchéité (24) taillés sur l'angle l'un par rapport à l'autre et présentant un bord dans la zone d'angle où ils sont jointés.

21. Dispositif de joint d'étanchéité selon une des revendications 11 à 20, **caractérisé en ce que** le dispositif de joint d'étanchéité (10) présente trois à huit, de préférence quatre à six, lèvres d'étanchéité (14) éloignées les unes des autres transversalement à leur tracé.

22. Dispositif de joint d'étanchéité selon la revendication 20, **caractérisé en ce que** plusieurs des lèvres d'étanchéité (14), de préférence chacune des lèvres d'étanchéité (14), présentent dans la zone d'angle une extension partant du corps de base (12) qui est plus petite que dans au moins une zone de la lèvre d'étanchéité (14) respective disposée à l'extérieur de la zone d'angle (16).

23. Carrosserie de véhicule utilitaire selon une des revendications 11 à 22, **caractérisé en ce que** le dispositif de joint d'étanchéité (10) présente une lèvre anti-poussière (15) disposée à l'extérieur sur le corps de base (12).
